# EUROPÄISCHE PATENTSCHRIFT

(11) **EP 4 117 413 B1**
(45) Veröffentlichungstag und Bekanntmachung des Hinweises auf die Patenterteilung: **13.08.2025**
(21) Anmeldenummer: 21710464.5
(22) Anmeldetag: 08.03.2021
(51) Int. Cl.: A01C 7/08

(54) **VERTEILVORRICHTUNG FUER KOERNIGES MATERIAL**
DISTRIBUTOR FOR GRANULAR MATERIAL
DISTRIBUTEUR DE MATÉRIAU GRANULAIRE

(30) Priorität: 13.03.2020 DE 102020106966
(43) Veröffentlichungstag der Anmeldung: 18.01.2023
(73) Patentinhaber: Amazonen-Werke H. Dreyer SE & Co. KG, 49205 Hasbergen (DE)
(72) Erfinder: ASCHE, Ingo, 27798 Hude (DE); FLUCKE, Jan, 27798 Hude (DE); WIEN, Thomas, 28816 Stuhr (DE); BRUNS, Helmut, 27804 Berne (DE)
(86) Internationale Anmeldenummer: PCT/EP2021/055718
(87) Internationale Veröffentlichungsnummer: WO 2021/180615

(56) Entgegenhaltungen:
- EP-A1- 3 225 093
- EP-A1- 3 698 614
- DE-A1- 102016 218 531
- FR-A1- 2 888 465

## Beschreibung

Die Erfindung betrifft eine Verteilvorrichtung für körniges Material gemäß dem Patentanspruch 1, eine landwirtschaftliche Verteilmaschine gemäß dem Patentanspruch 8 und ein Verfahren zum Betreiben einer Verteilvorrichtung für körniges Material gemäß dem Patentanspruch 9.

FR 2 888 465 A1 offenbart einen Dual-Mode-Verteilerkopf für eine Sämaschine. EP 3 225 093 A1 offenbart eine pneumatische Verteilmaschine und Absperrorgan für diese. DE 10 2016 218531 A1 offenbart einen Verteilerturm einer landwirtschaftlichen Verteilmaschine.

Landwirtschaftliche Verteilmaschinen, wie beispielsweise Sämaschinen, weisen mehrere nebeneinander angeordnete Ausbringeinrichtungen auf, über welche das körnige Material, beispielsweise Saatgut, in mehreren parallelen Reihen ausgebracht werden kann. Entsprechende Verteilmaschinen verfügen üblicherweise über eine sogenannte Einzelreihenschaltung, bei welcher die Materialausbringung entlang einzelner Reihen temporär unterbrochen werden kann.

Zur Umsetzung einer derartigen Einzelreihenschaltung werden in einem Verteilerkopf der Verteilmaschine mehrere Luft-Material-Einzelströmungen erzeugt, welche jeweils einer Reihe zugeordnet sind. Über Umlenkelemente können die jeweiligen Luft-Material-Einzelströmungen wahlweise einer Ausbringeinrichtung, beispielsweise einem Säschar, zugeleitet oder in eine Materialrückführung umgeleitet werden. Die Materialrückführung führt zurück in eine mit dem Verteilerkopf verbundene Hauptförderleitung, welche beispielsweise als Steigrohr ausgebildet sein kann. Über die Materialrückführung wird somit eine Zirkulation des zurückgeführten Materials umgesetzt.

Wenn mehrere Reihen gleichzeitig abgeschaltet werden, stören die mehreren zurückgeführten Luft-Material-Einzelströmungen den Förderstrom in der Hauptförderleitung. Um diesem Problem zu begegnen, kann Luft einer umgelenkten Luft-Material-Einzelströmung über eine Bypassleitung in einen zu einem Ausbringelement führenden Leitungsabschnitt gespeist werden. Auf diese Weise wird die Materialzirkulation beibehalten und gleichzeitig überschüssige Luft abgeführt und über die Ausbringelemente aus dem System ausgeleitet. Durch die Abscheidung und Ausleitung der überschüssigen Luft wird der Förderstrom in der Hauptförderleitung auch bei einer Vielzahl von abgeschalteten Reihen nicht mehr durch die Materialrückführung gestört. Ein nach diesem Prinzip arbeitender Verteilturm ist beispielsweise aus der Druckschrift WO 2017/055266 A1 bekannt.

Die zur Materialrückführung eingesetzten Rückführeinrichtungen weisen üblicherweise ein bewegliches Umlenkelement auf, welches in eine Ausbringstellung und eine Absperrstellung verbringbar ist. In der Ausbringstellung des Umlenkelements wird eine in einen Einströmbereich der Rückführeinrichtung einströmende Luft-Material-Einzelströmung einem mit einer Ausbringleitung verbundenen Ausbringbereich zugeleitet. In der Absperrstellung des Umlenkelements wird eine in den Einströmbereich der Rückführeinrichtung einströmende Luft-Material-Einzelströmung über eine Rückführleitung der Rückführeinrichtung einem mit der Hauptförderleitung verbundenen Rückführbereich der Rückführeinrichtung zugeleitet.

Bei den aus dem Stand der Technik bekannten Lösungen besteht das Problem, dass unabhängig von der Stellung des Umlenkelements eine pneumatische Verbindung zwischen dem Rückführbereich und dem Ausbringbereich der Rückführeinrichtung besteht. Somit besteht das Risiko, dass Luft aus dem Ausbringbereich über den Rückführbereich zurück in die Hauptförderleitung strömt, währenddessen sich das Umlenkelement in der Ausbringstellung befindet. Durch diese unbeabsichtigte Luftrückführung kann die Luft-Material-Einzelströmung innerhalb der Hauptförderleitung gestört werden, sodass die Materialförderung zum Verteilerkopf beeinträchtigt wird. Ferner kann durch die unbeabsichtigte Luftrückführung der Materialtransport in der Ausbringleitung gestört werden.

Die der Erfindung zugrundeliegende Aufgabe besteht somit darin, eine pneumatische Verbindung zwischen dem Ausbringbereich und dem Rückführbereich entsprechender Rückführeinrichtungen zu verhindern, wenn eine Materialrückführung nicht beabsichtigt ist.

Die Aufgabe wird gelöst durch eine Verteilvorrichtung der eingangs genannten Art, wobei das Umlenkelement der erfindungsgemäßen Verteilvorrichtung dazu eingerichtet ist, eine den Rückführbereich der Rückführeinrichtung und den Ausbringbereich der Rückführeinrichtung verbindende Bypassleitung der Rückführeinrichtung in der Ausbringstellung abzusperren.

Die Erfindung macht sich die Erkenntnis zunutze, dass das bewegliche Umlenkelement der Rückführeinrichtung nicht nur zum Umlenken einer Luft-Material-Einzelströmung auf einen Rückführpfad, sondern darüber hinaus auch zum Absperren einer Bypassleitung genutzt werden kann. Wenn sich das Umlenkelement der erfindungsgemäßen Verteilvorrichtung in der Ausbringstellung befindet, besteht keine pneumatische Verbindung zwischen dem Rückführbereich bzw. der Rückführleitung und dem Ausbringbereich bzw. der Ausbringleitung, sodass das Risiko einer druckbedingten Störung des Materialtransports in der Hauptförderleitung und in der Ausbringleitung der Verteilvorrichtung eliminiert oder zumindest erheblich verringert wird, wenn sich das Umlenkelement in der Ausbringstellung befindet. Es liegt also keine dauerhafte pneumatische Verbindung zwischen dem Rückführbereich bzw. der Rückführleitung und dem Ausbringbereich bzw. der Ausbringleitung vor. Die Unterbrechung der pneumatischen Verbindung zwischen dem Rückführbereich bzw. der Rückführleitung und dem Ausbringbereich bzw. der Ausbringleitung erfolgt bei der erfindungsgemäßen Verteilvorrichtung über die Stellung des Umlenkelements. Eine Luftabscheidung aus der Luft-Material-Einzelströmung über die Bypassleitung ist nur in der Absperrstellung des Umlenkelements möglich. Wenn sich das Umlenkelement in der Absperrstellung befindet, erfolgt in der der Rückführeinrichtung zugeordneten Reihe keine Materialausbringung.

Das Umlenkelement ist vorzugsweise eine Absperrklappe. Das Umlenkelement ist zwischen der Ausbringstellung und der Absperrstellung verdrehbar oder verkippbar. Die Bewegung des Umlenkelements wird vorzugsweise über einen Umschaltantrieb veranlasst. Der Umschaltantrieb kann ein elektrischer, pneumatischer oder hydraulischer Antrieb sein. Zwischen der Rückführeinrichtung und dem Umschaltantrieb besteht vorzugsweise eine Schnittstelle, die es erlaubt, dass Umlenkelement fernbetätigt zu verdrehen. Alternativ oder zusätzlich kann das Umlenkelement auch manuell über eine außenliegende Betätigungseinrichtung zwischen der Ausbringstellung und der Absperrstellung bewegt werden.

Der Verteilkopf weist vorzugsweise mehrere Auslassöffnungen auf. Die mehreren Auslassöffnungen sind vorzugsweise über den Umfang des Verteilkopfes verteilt. Die Hauptförderleitung kann ein Steigrohr sein. Zwischen dem Ausbringbereich der Rückführeinrichtung und der Ausbringeinrichtung, also beispielsweise dem Schar, kann eine Portioniereinrichtung angeordnet sein. Die Portioniereinrichtung ist dazu eingerichtet, aus einer Luft-Material-Einzelströmung Materialportionen zu erzeugen, sodass das körnige Material portionsweise auf die landwirtschaftliche Nutzfläche ausgebracht werden kann. Die Portioniereinrichtung kann ein Ventil sein oder rotatorisch arbeiten. Ferner kann die Portioniereinrichtung auch dazu eingerichtet sein, Portionen von körnigem Material auf eine andere Art und Weise zu erzeugen.

In einer bevorzugten Ausführungsform der erfindungsgemäßen Verteilvorrichtung ist das Umlenkelement dazu eingerichtet, die Bypassleitung in der Absperrstellung freizugeben. Somit kann in der Absperrstellung des Umlenkelements überschüssige Luft aus der umgelenkten und zurückzuführenden Luft-Material-Einzelströmung abgeschieden und über die Bypassleitung der Ausbringeinrichtung zugeführt werden.

Bei der erfindungsgemäßen Verteilvorrichtung ist das Umlenkelement als Wippe mit zwei Wippenschenkeln ausgebildet, wobei sich die Wippenschenkel jeweils von einer Drehachse des Umlenkelements radial nach außen erstrecken. Vorzugsweise ist das Umlenkelement als doppelseitige Wippe ausgebildet. In einer ersten Drehwinkelstellung des Umlenkelements wird eine in den Einströmbereich der Rückführeinrichtung einströmende Luft-Material-Einzelströmung dem Ausbringbereich der Rückführeinrichtung zugeleitet. In einer zweiten Drehwinkelstellung des Umlenkelements wird eine in den Einströmbereich der Rückführeinrichtung einströmende Luft-Material-Einzelströmung dem Rückführbereich der Rückführeinrichtung zugeleitet.

Die erfindungsgemäße Verteilvorrichtung wird ferner dadurch vorteilhaft weitergebildet, dass ein Wippenschenkel des Umlenkelements dazu eingerichtet ist, in der Ausbringstellung des Umlenkelements die Bypassleitung der Rückführeinrichtung abzusperren. Alternativ oder zusätzlich kann ein Wippenschenkel des Umlenkelements dazu eingerichtet sein, in der Ausbringstellung des Umlenkelements einen Durchgang zwischen dem Einströmbereich der Rückführeinrichtung und dem Rückführbereich der Rückführeinrichtung abzusperren. Der Durchgang zwischen dem Einströmbereich der Rückführeinrichtung und dem Rückführbereich der Rückführeinrichtung verläuft vorzugsweise beabstandet von der Bypassleitung. Insbesondere verläuft der Durchgang zwischen dem Einströmbereich der Rückführeinrichtung und dem Rückführbereich der Rückführeinrichtung parallel zur Bypassleitung. Alternativ oder zusätzlich kann zumindest ein Wippenschenkel des Umlenkelements dazu eingerichtet sein, in der Absperrstellung des Umlenkelements einen Durchgang zwischen dem Einströmbereich der Rückführeinrichtung und dem Ausbringbereich der Rückführeinrichtung abzusperren. Der Wippenschenkel, welcher in der Absperrstellung des Umlenkelements den Durchgang zwischen dem Einströmbereich der Rückführeinrichtung und dem Ausbringbereich der Rückführeinrichtung absperrt, ist vorzugsweise der Wippenschenkel, welcher in der Ausbringstellung des Umlenkelements den Durchgang zwischen dem Einströmbereich der Rückführeinrichtung und dem Rückführbereich der Rückführeinrichtung absperrt.

In einer weiteren bevorzugten Ausführungsform der Verteilvorrichtung weist die Rückführeinrichtung einen Trennkörper auf, welche die Rückführleitung und die Bypassleitung zumindest abschnittsweise voneinander trennt, wobei das Umlenkelement vorzugsweise dazu eingerichtet ist, in der Absperrstellung mit dem Trennkörper in Kontakt zu stehen. Der Trennkörper und zumindest ein Wippenschenkel des Umlenkelements überdecken sich vorzugsweise in der Absperrstellung des Umlenkelements. Der Trennkörper ist vorzugsweise ein länglicher Trennsteg. Der Trennkörper erstreckt sich vorzugsweise bis in den Nahbereich der Drehachse des Umlenkelements, damit der Überdeckungsgrad maximiert und die Abdichtung optimiert wird.

In einer Weiterbildung der erfindungsgemäßen Verteilvorrichtung weist die Rückführeinrichtung zwischen dem Ausbringbereich und der Bypassleitung eine, insbesondere umlaufende Anschlagsrippe auf. Das Umlenkelement ist vorzugsweise dazu eingerichtet, in der Ausbringstellung mit der Anschlagsrippe in Kontakt zu stehen. Wenn die Anschlagsrippe umlaufend ausgebildet ist, bildet diese vorzugsweise einen Anschlagsrahmen, an welchem die Außenkanten eines Wippenschenkels des Umlenkelements anschlagen. Die Anschlagsrippe dient ebenfalls der Optimierung der Abdichtung.

Es ist außerdem eine erfindungsgemäße Verteilvorrichtung vorteilhaft, bei welcher das Umlenkelement zumindest abschnittsweise aus einem elastischen Material ausgebildet ist. Vorzugsweise ist das Umlenkelement dazu eingerichtet, sich bei Einnahme der Ausbringstellung und/oder der Absperrstellung elastisch zu verformen. In der Ausbringstellung und/oder der Absperrstellung wird somit eine Materialverspannung erzeugt, welche für eine bessere Abdichtung in der Ausbringstellung und/oder der Absperrstellung sorgt.

Darüber hinaus ist eine erfindungsgemäße Verteilvorrichtung vorteilhaft, bei welcher der Rückführbereich der Rückführeinrichtung über eine Einspeiseleitung mit einem Einspeisebereich der Hauptförderleitung verbunden ist. Die Hauptförderleitung weist zwischen dem Einspeisebereich und dem Verteilerkopf einen Steigrohrquerschnitt auf und die Hauptförderleitung weist in Strömungsrichtung vor dem Einspeisebereich einen Einspeisequerschnitt auf, der vorzugsweise als eine Düse ausgebildet ist. Der Steigrohrquerschnitt und der Einspeisequerschnitt stehen in einem Verhältnis von 1:1 bis 2:1, vorzugsweise etwa 1,4:1, zueinander. Die Düse kann in die Hauptförderleitung integriert sein, wobei in Strömungsrichtung vor dem Einspeisebereich heißt entgegen der Förderrichtung zum Verteilkopf. Vorzugsweise weist die Hauptförderleitung einen runden Querschnitt auf, sodass die Hauptförderleitung zwischen dem Einspeisebereich und dem Verteilerkopf einen größeren Durchmesser aufweist als in Strömungsrichtung vor dem Einspeisebereich. Vorzugsweise ist der Durchmesser der Hauptförderleitung zwischen dem Einspeisebereich und dem Verteilerkopf größer als im Bereich der in die Hauptförderleitung integrierten Düse. Über den größeren Querschnitt kann zusätzlich eine erhöhte Luftmenge aus den Rückführeinrichtung kompensiert werden. Die Hauptförderleitung ist zwischen dem Einspeisebereich und dem Verteilerkopf vorzugsweise als Wellrohr ausgebildet. Die Düse, welche in Strömungsrichtung vor dem Einspeisebereich liegt, kann eine austauschbare Düse sein.

Es ist außerdem eine erfindungsgemäße Verteilvorrichtung bevorzugt, bei welcher in einem Übergangsbereich zwischen der Einspeiseleitung und der Hauptförderleitung im Betrieb der Verteilvorrichtung ein Druckniveau anliegt, welches höher ist als das Druckniveau im Ausbringbereich der Rückführeinrichtung, das Druckniveau in der Rückführleitung der Rückführeinrichtung und/oder das Druckniveau in der Bypassleitung der Rückführeinrichtung, wenn sich das Umlenkelement in der Absperrstellung befindet. In dem Übergangsbereich zwischen der Einspeiseleitung und der Hauptförderleitung liegt im Betrieb der Verteilvorrichtung vorzugsweise in Druckniveau an, welches niedriger ist als das Druckniveau im Ausbringbereich der Rückführeinrichtung, das Druckniveau in der Rückführleitung der Rückführeinrichtung und/oder das Druckniveau in der Bypassleitung der Rückführleitung, wenn sich das Umlenkelement in der Ausbringstellung befindet. Die zuvor bezeichneten Druckverhältnisse stellen sich während des Betriebs der Verteilvorrichtung insbesondere dann ein, wenn sich ein Großteil der Umlenkelemente der Rückführeinrichtungen in der Ausbringstellung befinden.

Die der Erfindung zugrundeliegende Aufgabe wird ferner durch eine landwirtschaftliche Verteilmaschine der eingangs genannten Art gelöst, wobei die Verteilvorrichtung der erfindungsgemäßen Verteilmaschine nach einer der vorstehend beschriebenen Ausführungsformen ausgebildet ist. Hinsichtlich der Vorteile und Modifikationen der erfindungsgemäßen Verteilmaschine wird auf die Vorteile und Modifikationen der erfindungsgemäßen Verteilvorrichtung verwiesen.

Die der Erfindung zugrundeliegende Aufgabe wird ferner durch ein Verfahren der eingangs genannten Art gelöst, wobei im Rahmen des erfindungsgemäßen Verfahrens das Umlenkelement in der Ausbringstellung eine den Rückführbereich der Rückführeinrichtung und den Ausbringbereich der Rückführeinrichtung verbindende Bypassleitung der Rückführeinrichtung absperrt. Beim Bewegen des Umlenkelements zwischen der Ausbringstellung und der Absperrstellung führt das Umlenkelement vorzugsweise eine Drehbewegung aus. Das Umlenkelement ist erfindungsgemäß als Wippe mit zwei Wippenschenkeln ausgebildet ist, wobei sich die Wippenschenkel jeweils von einer Drehachse des Umlenkelements radial nach außen erstrecken.

In einer bevorzugten Ausführungsform des erfindungsgemäßen Verfahrens gibt das Umlenkelement in der Absperrstellung die Bypassleitung frei. Durch die Freigabe der Bypassleitung wird eine pneumatische Verbindung zwischen dem Ausbringbereich und dem Rückführbereich der Rückführeinrichtung hergestellt. Diese pneumatische Verbindung liegt nicht vor, wenn sich das Umlenkelement in der Ausbringstellung befindet.

Das erfindungsgemäße Verfahren wird ferner dadurch vorteilhaft weitergebildet, dass in der Ausbringstellung des Umlenkelements ein erster Wippenschenkel des Umlenkelements einen Durchgang zwischen dem Einströmbereich der Rückführeinrichtung und dem Rückführbereich der Rückführeinrichtung absperrt und ein zweiter Wippenschenkel des Umlenkelements die Bypassleitung der Rückführeinrichtung absperrt.

Darüber hinaus ist ein erfindungsgemäßes Verfahren vorteilhaft, bei welchem in der Absperrstellung des Umlenkelements ein erster Wippenschenkel des Umlenkelements einen Durchgang zwischen dem Einströmbereich der Rückführeinrichtung und dem Ausbringbereich der Rückführeinrichtung absperrt. Es ist darüber hinaus ein erfindungsgemäßes Verfahren vorteilhaft, bei welchem der Rückführbereich der Rückführeinrichtung über eine Einspeiseleitung mit der Hauptförderleitung verbunden ist, wobei in einem Übergangsbereich zwischen der Einspeiseleitung und der Hauptförderleitung ein Druckniveau anliegt, welches höher ist als das Druckniveau im Ausbringbereich der Rückführeinrichtung, das Druckniveau in der Rückführleitung der Rückführeinrichtung und/oder das Druckniveau in der Bypassleitung der Rückführeinrichtung, wenn sich das Umlenkelement in der Absperrstellung befindet. Alternativ oder zusätzlich liegt in dem Übergangsbereich zwischen der Einspeiseleitung und der Hauptförderleitung ein Druckniveau an, welches niedriger ist als das Druckniveau im Ausbringbereich der Rückführeinrichtung, das Druckniveau in der Rückführleitung der Rückführeinrichtung und/oder das Druckniveau in der Bypassleitung der Rückführeinrichtung, wenn sich das Umlenkelement in der Ausbringstellung befindet.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Verteilvorrichtung in einer perspektivischen Darstellung;
- Fig. 2: Teile der in der Fig. 1 abgebildeten Verteilvorrichtung in einer Seitenansicht;
- Fig. 3: eine Rückführeinrichtung einer erfindungsgemäßen Verteilvorrichtung in einer Schnittdarstellung, wobei sich das Umlenkelement in der Ausbringstellung befindet;
- Fig. 4: die in der Fig. 3 abgebildete Rückführeinrichtung ebenfalls in einer Schnittdarstellung, wobei sich das Umlenkelement in der Absperrstellung befindet;
- Fig. 5: eine Rückführeinrichtung einer erfindungsgemäßen Verteilvorrichtung in einer Schnittdarstellung, wobei sich das Umlenkelement in der Ausbringstellung befindet;
- Fig. 6: die in der Fig. 5 abgebildete Rückführeinrichtung ebenfalls in einer Schnittdarstellung, wobei sich das Umlenkelement in der Absperrstellung befindet;
- Fig. 7: einen Bereich einer erfindungsgemäßen Verteilvorrichtung in einer Schnittdarstellung, wobei sich das Umlenkelement der Rückführeinrichtung in der Ausbringstellung befindet;
- Fig. 8: die in der Fig. 7 abgebildete Verteilvorrichtung ebenfalls in einer Schnittdarstellung, wobei sich das Umlenkelement der Rückführeinrichtung in der Absperrstellung befindet;

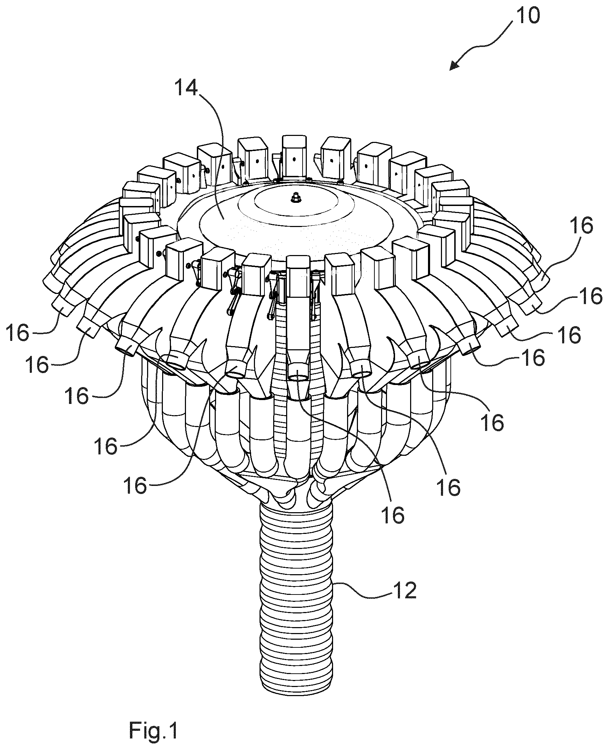

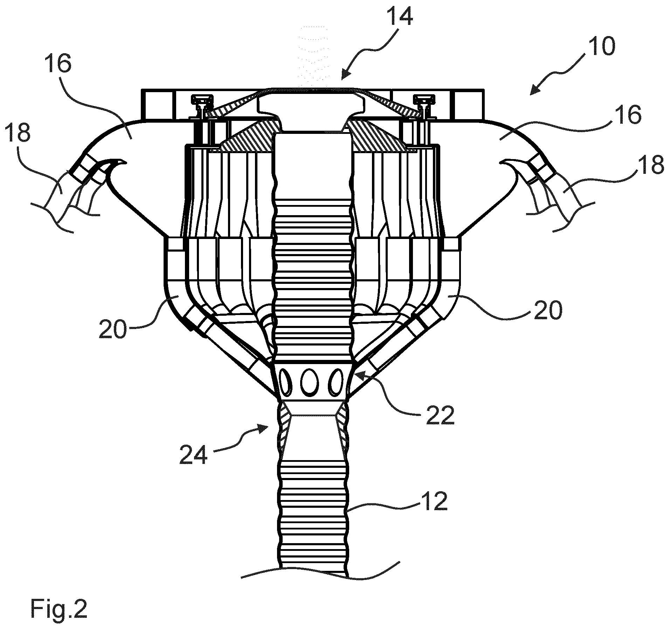

Die Fig. 1 und 2 zeigen eine Verteilvorrichtung 10 für körniges Material, beispielsweise für Saatgut oder Dünger. Die Verteilvorrichtung 10 weist eine Hauptförderleitung 12 auf, welche als Steigrohr ausgebildet ist. Über die Hauptförderleitung 12 kann einem Verteilerkopf 14 der Verteilvorrichtung 10 eine Luft-Material-Hauptströmung zugeleitet werden. Der Verteilerkopf 14 ist dazu eingerichtet, die Luft-Material-Hauptströmung in mehrere Luft-Material-Einzelströmungen aufzuteilen.

Die erzeugten Luft-Material-Einzelströmungen werden jeweils über eine Rückführeinrichtung 16 und eine Ausbringleitung 18 einer Portioniereinrichtung zugeleitet, wobei die Portioniereinrichtung dazu eingerichtet ist, aus den Luft-Material-Einzelströmungen Materialportionen zu erzeugen, sodass das körnige Material portionsweise auf eine landwirtschaftliche Nutzfläche abgelegt werden kann.

Die landwirtschaftliche Verteilmaschine ist dazu eingerichtet, das körnige Material in voneinander beabstandeten Reihen auf die landwirtschaftliche Nutzfläche auszubringen.

Die Verteilvorrichtung 10 erlaubt die Umsetzung einer Einzelreihenschaltung, bei welcher die Ausbringung entlang einzelner Reihen temporär unterbrochen werden kann. Eine einzelne Reihe kann dadurch abgeschaltet werden, dass die Einleitung von körnigem Material in die jeweilige Ausbringleitung 18 unterbrochen wird. Hierzu können die Rückführeinrichtungen 16 die jeweils einströmende Luft-Material-Einzelströmung umlenken, sodass diese nicht der Ausbringleitung 18, sondern einer Einspeiseleitung 20 zugeführt wird, über welche die Luft-Material-Einzelströmung zurück in die Hauptförderleitung 12 geführt wird.

Die Einspeiseleitungen 20, welche jeweils mit einer Rückführeinrichtung 16 verbunden sind, sind mit einem Einspeisebereich 22 der Hauptförderleitung 12 verbunden. Unterhalb des Einspeisebereichs 22 und somit in Strömungsrichtung vor dem Einspeisebereich 22 ist in die Hauptförderleitung 12 eine Düse 24 integriert, welche einen Einspeisequerschnitt der Hauptförderleitung ausbildet, wobei der Einspeisequerschnitt der Hauptförderleitung 12 im Bereich der Düse 24 in einem Verhältnis zu einem Steigrohrquerschnitt der Hauptförderleitung 12 zwischen dem Einspeisebereich 22 und dem Verteilerkopf 14 steht, welches zwischen 1:1 und 1:2, hier etwa 1:1,4, beträgt. Der Einspeisequerschnitt, also der Durchmesser der Düse 24 ist also vorzugsweise kleiner als der Steigrohrquerschnitt im Bereich der Hauptförderleitung 12 zwischen der Düse 24 und dem Verteilerkopf 14.

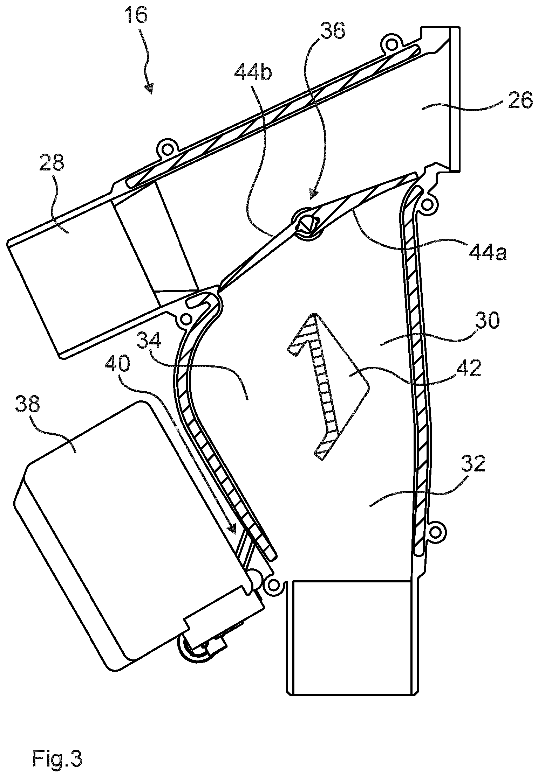

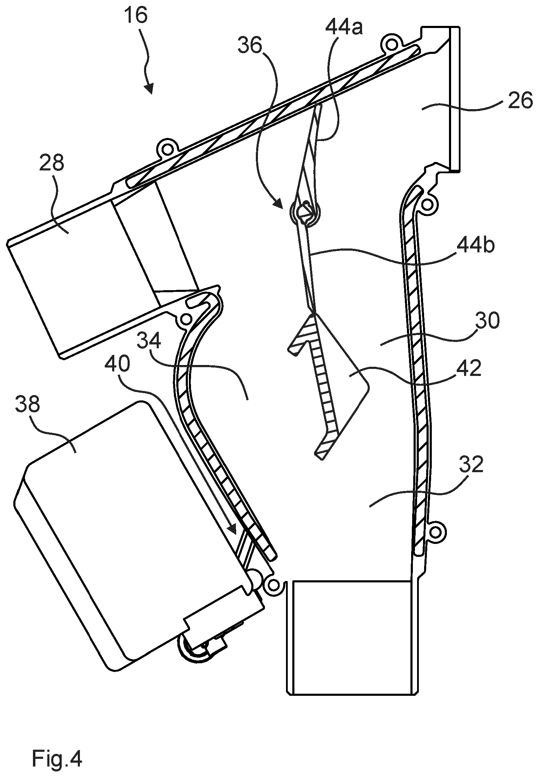

Die Fig. 3 und 4 zeigen eine Rückführeinrichtung 16 einer Verteilvorrichtung 10. Der Gehäusekörper der Rückführeinrichtung 16 weist einen Einströmbereich 26 auf, über welchen eine von dem Verteilerkopf 14 erzeugte Luft-Material-Einzelströmung in die Rückführeinrichtung 16 einströmen kann. Wenn körniges Material über die mit der Rückführeinrichtung 16 verbundenen Ausbringeinrichtung auf die landwirtschaftliche Nutzfläche ausgebracht werden soll, ist die über den Einströmbereich 26 der Rückführeinrichtung 16 einströmende Luft-Material-Einzelströmung dem Ausbringbereich 28 der Rückführeinrichtung 16 zuzuleiten. Wenn eine Abschaltung der Reihe erfolgen soll, ist die über den Einströmbereich 26 in die Rückführeinrichtung 16 einströmende Luft-Material-Einzelströmung dem Rückführbereich 32 der Rückführeinrichtung 16 zuzuleiten. Die Zuleitung der Luft-Material-Einzelströmung zu dem Rückführbereich 32 erfolgt über die Rückführleitung 30.

Die Rückführeinrichtung 16 weist ein bewegliches Umlenkelement 36 auf, welches in eine Ausbringstellung und in eine Absperrstellung verbringbar ist.

Die Fig. 3 zeigt die Rückführeinrichtung 16, währenddessen sich das Umlenkelement 36 in der Ausbringstellung befindet. In der Ausbringstellung leitet das Umlenkelement 36 eine in den Einströmbereich 26 der Rückführeinrichtung 16 einströmende Luft-Material-Einzelströmung dem Ausbringbereich 28 der Rückführeinrichtung 16 zu. Die Fig. 4 zeigt die Rückführeinrichtung 16, wobei sich das Umlenkelement 36 in der Absperrstellung befindet. In der Absperrstellung leitet das Umlenkelement 36 eine in den Einströmbereich 26 der Rückführeinrichtung 16 einströmende Luft-Material-Einzelströmung über die Rückführleitung 30 dem Rückführbereich 32 der Rückführeinrichtung 16 zu.

Das Umlenkelement 36 ist zwischen der Ausbringstellung und der Absperrstellung verdrehbar. Die Bewegung des Umlenkelements 36 wird über einen Umschaltantrieb 38 veranlasst. Der Umschaltantrieb ist vorliegend ein elektrischer Antrieb. Der Umschaltantrieb 38 ist über eine Umschaltstange 40 mit dem Umlenkelement 36 verbunden.

Das Umlenkelement 36 ist vorliegend als Wippe ausgebildet und dazu eingerichtet, eine den Rückführbereich 32 der Rückführeinrichtung 16 und den Ausbringbereich 28 der Rückführeinrichtung 16 verbindende Bypassleitung 34 der Rückführeinrichtung 16 in der Ausbringstellung abzusperren. Wenn sich das Umlenkelement 36 in der Fig. 3 dargestellten Ausbringstellung befindet, besteht keine pneumatische Verbindung zwischen dem Rückführbereich 32 und dem Ausbringbereich 28. Somit wird vermieden, dass eine dauerhafte pneumatische Verbindung zwischen dem Rückführbereich 32 und dem Ausbringbereich 28 vorliegt. Die Unterbrechung der pneumatischen Verbindung zwischen dem Rückführbereich 32 und dem Ausbringbereich 28 erfolgt über die Stellung des Umlenkelements 36.

Wenn sich das Umlenkelement 36 in der in der Fig. 4 dargestellten Absperrstellung befindet, erfolgt in der der Rückführeinrichtung 16 zugeordneten Reihe keine Materialausbringung. In der Absperrstellung gibt das Umlenkelement 36 die Bypassleitung 34 frei, sodass Luft aus der umgeleiteten Luft-Material-Einzelströmung abgeschieden und über die Bypassleitung 34 und den Ausbringbereich 28 abtransportiert werden kann. Auf diese Weise wird vermieden, dass die Luft-Material-Hauptströmung innerhalb der Hauptförderleitung 12 durch eine übermäßige Menge an zurückgeführter Luft aus den Rückführeinrichtungen 16 gestört wird.

Das als Wippe ausgebildete Umlenkelement 36 weist zwei Wippenschenkel 44a, 44b auf. Die Wippenschenkel 44a, 44b erstrecken sich von einer Drehachse des Umlenkelements 36 radial nach außen.

Die Wippenschenkel 44a, 44b des Umlenkelements 36 dienen in der Ausbringstellung des Umlenkelements 36 zur Absperrung der Bypassleitung 34 gegenüber dem Ausbringbereich 28. Ferner dienen die Wippenschenkel 44a, 44b in der Ausbringstellung des Umlenkelements 36 zum Absperren eines Durchgangs zwischen dem Einströmbereich 26 und dem Rückführbereich 32 der Rückführeinrichtung 16. In der Absperrstellung des Umlenkelements 36 dienen die Wippenschenkel 44a, 44b des Umlenkelements dazu, einen Durchgang zwischen dem Einströmbereich 26 und dem Ausbringbereich 28 der Rückführeinrichtung 16 abzusperren.

Die Verteilvorrichtung 10 weist ferner einen Trennkörper 42 auf, welcher die Rückführleitung 30 und die Bypassleitung 34 zumindest abschnittsweise voneinander trennt, wobei das Umlenkelement 36 dazu eingerichtet ist, in der Absperrstellung mit dem Trennkörper 42 in Kontakt zu stehen.

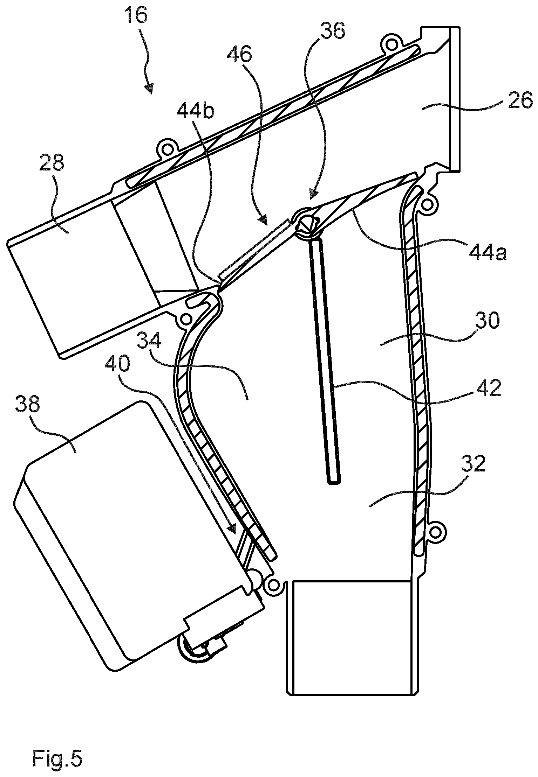

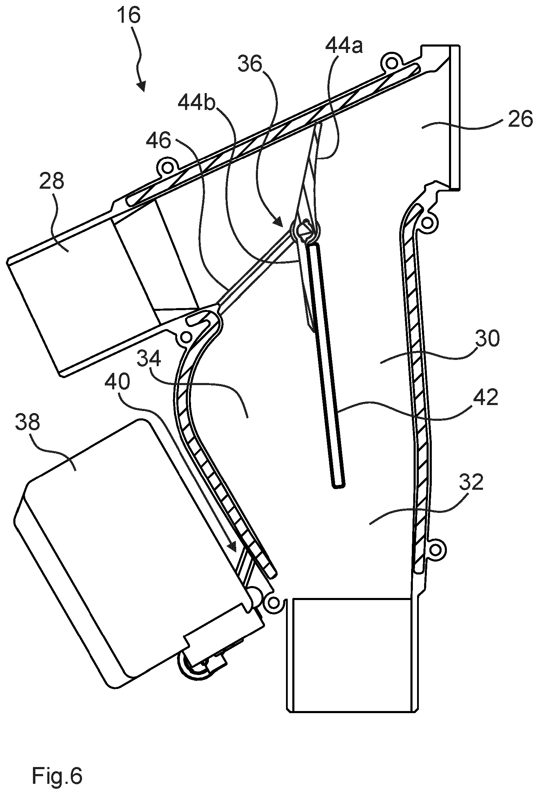

Bei der in den Fig. 5 und 6 dargestellten Ausführungsform der Rückführeinrichtung 16 ist der Trennkörper 42 als länglicher Trennsteg ausgebildet, welcher sich bis in den Nahbereich der Drehachse des Umlenkelements 36 erstreckt. Der Trennkörper 42 und der Wippenschenkel 44b des Umlenkelements 36 überdecken sich in der Absperrstellung des Umlenkelements 36.

Ferner weist die Rückführeinrichtung 16 zwischen dem Ausbringbereich 28 und der Bypassleitung 34 in dieser Ausführungsform eine umlaufende Anschlagsrippe 46 auf, wobei das Umlenkelement 36 in der in der Fig. 5 dargestellten Ausbringstellung mit der Anschlagsrippe 46 in Kontakt steht. Da die Anschlagsrippe 46 umlaufend ausgebildet ist, bildet diese einen Anschlagsrahmen, an welchem die Außenkanten des Wippenschenkels 44b des Umlenkelements 36 in der Ausbringstellung des Umlenkelements 36 anschlagen.

Die Wippenschenkel 44a, 44b des Umlenkelements 36 können aus einem elastischen Material ausgebildet sein, sodass diese sich bei Einnahme der Ausbringstellung und/oder bei der Einnahme der Absperrstellung elastisch verformen.

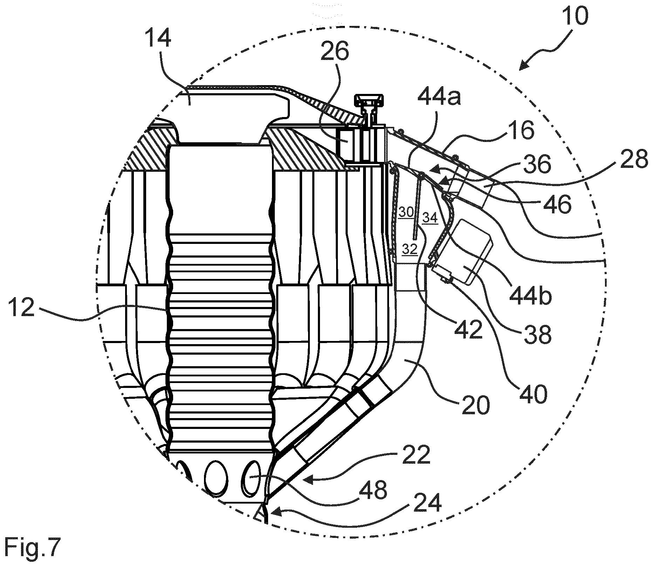

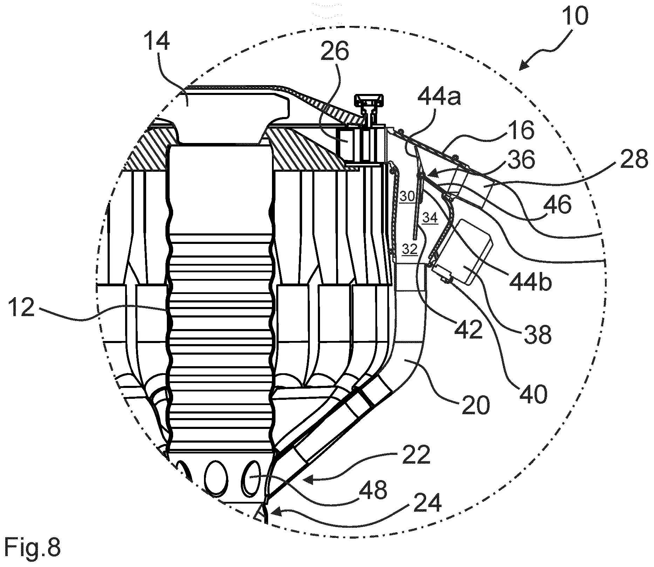

Die Fig. 7 und 8 zeigen, dass der Rückführbereich 32 der Rückführeinrichtung 16 über eine Einspeiseleitung 20 mit einem Einspeisebereich 22 der Hauptförderleitung 12 verbunden ist. Die Hauptförderleitung 12 weist zwischen dem Einspeisebereich 22 und dem Verteilerkopf 14 einen größeren Querschnitt auf als in Strömungsrichtung vor dem Einspeisebereich 22. In Strömungsrichtung vor dem Einspeisebereich 22 befindet sich eine in die Hauptförderleitung 12 integrierte Düse 24, welche für eine Querschnittsverkleinerung sorgt.

In einem Übergangsbereich 48 zwischen der Einspeiseleitung 20 und der Hauptförderleitung 12 liegt ein Druckniveau an, welches höher ist als das Druckniveau im Ausbringbereich 28 der Rückführeinrichtung 16, das Druckniveau in der Rückführleitung 30 der Rückführeinrichtung 16 und das Druckniveau in der Bypassleitung 34 der Rückführeinrichtung 16, wenn sich das Umlenkelement 36 in der in der Fig. 8 dargestellten Absperrstellung befindet.

### Bezugszeichenliste

- 10: Verteilvorrichtung
- 12: Hauptförderleitung
- 14: Verteilerkopf
- 16: Rückführeinrichtungen
- 18: Ausbringleitungen
- 20: Einspeiseleitungen
- 22: Einspeisebereich
- 24: Düse
- 26: Einströmbereich
- 28: Ausbringbereich
- 30: Rückführleitung
- 32: Rückführbereich
- 34: Bypassleitung
- 36: Umlenkelement
- 38: Umschaltantrieb
- 40: Umschaltstange
- 42: Trennkörper
- 44a, 44b: Wippenschenkel
- 46: Anschlagsrippe
- 48: Übergangsbereich

## Patentansprüche

1. Verteilvorrichtung (10) für körniges Material, mit
- einem Verteilerkopf (14), welcher dazu eingerichtet ist, eine durch eine Hauptförderleitung (12) dem Verteilerkopf (14) zugeleitete Luft-Material-Hauptströmung in mehrere Luft-Material-Einzelströmungen aufzuteilen; und
- zumindest einer Rückführeinrichtung (16), welche ein bewegliches Umlenkelement (36) aufweist, welches dazu eingerichtet ist, in einer Ausbringstellung eine in einen Einströmbereich (26) der Rückführeinrichtung (16) einströmende Luft-Material-Einzelströmung einem mit einer Ausbringleitung (18) verbundenen Ausbringbereich (28) der Rückführeinrichtung (16) zuzuleiten und in einer Absperrstellung eine in den Einströmbereich (26) der Rückführeinrichtung (16) einströmende Luft-Material-Einzelströmung über eine Rückführleitung (30) der Rückführeinrichtung (16) einem mit der Hauptförderleitung (12) verbundenen Rückführbereich (32) der Rückführeinrichtung (16) zuzuleiten;
wobei das Umlenkelement (36) dazu eingerichtet ist, eine den Rückführbereich (32) der Rückführeinrichtung (16) und den Ausbringbereich (28) der Rückführeinrichtung (16) verbindende Bypassleitung (34) der Rückführeinrichtung (16) in der Ausbringstellung abzusperren, wobei das Umlenkelement (36) als Wippe mit zwei Wippenschenkeln (44a, 44b) ausgebildet ist, wobei sich die Wippenschenkel (44a, 44b) jeweils von einer Drehachse des Umlenkelements (36) radial nach außen erstrecken.

2. Verteilvorrichtung (10) nach Anspruch 1,
**dadurch gekennzeichnet, dass** das Umlenkelement (36) dazu eingerichtet ist, die Bypassleitung (34) in der Absperrstellung freizugeben.

3. Verteilvorrichtung (10) nach Anspruch 1 oder 2,
**dadurch gekennzeichnet, dass**
- ein Wippenschenkel (44b) des Umlenkelements (36) dazu eingerichtet ist, in der Ausbringstellung des Umlenkelements (36) die Bypassleitung (34) der Rückführeinrichtung (16) abzusperren;
- ein Wippenschenkel (44a) des Umlenkelements (36) dazu eingerichtet ist, in der Ausbringstellung des Umlenkelements (36) einen Durchgang zwischen dem Einströmbereich (26) der Rückführeinrichtung (16) und dem Rückführbereich (32) der Rückführeinrichtung (16) abzusperren; und/oder
- zumindest ein Wippenschenkel (44a) des Umlenkelements (36) dazu eingerichtet ist, in der Absperrstellung des Umlenkelements (36) einen Durchgang zwischen dem Einströmbereich (26) der Rückführeinrichtung (16) und dem Ausbringbereich (28) der Rückführeinrichtung (16) abzusperren.

4. Verteilvorrichtung (10) nach einem der vorstehenden Ansprüche,
**dadurch gekennzeichnet, dass** die Rückführeinrichtung (16) einen Trennkörper (42) aufweist, welcher die Rückführleitung (30) und die Bypassleitung (34) zumindest abschnittsweise voneinander trennt, wobei das Umlenkelement (36) dazu eingerichtet ist, in der Absperrstellung mit dem Trennkörper (42) in Kontakt zu stehen.

5. Verteilvorrichtung (10) nach einem der vorstehenden Ansprüche,
**dadurch gekennzeichnet, dass** die Rückführeinrichtung (16) zwischen dem Ausbringbereich (28) und der Bypassleitung (34) eine, insbesondere umlaufende, Anschlagsrippe (46) aufweist, wobei das Umlenkelement (36) dazu eingerichtet ist, in der Ausbringstellung mit der Anschlagsrippe (46) in Kontakt zu stehen.

6. Verteilvorrichtung (10) nach einem der vorstehenden Ansprüche,
**dadurch gekennzeichnet, dass** das Umlenkelement (36) zumindest abschnittsweise aus einem elastischen Material ausgebildet und dazu eingerichtet ist, sich bei Einnahme der Ausbringstellung und/oder der Absperrstellung elastisch zu verformen.

7. Verteilvorrichtung (10) nach einem der vorstehenden Ansprüche,
**dadurch gekennzeichnet, dass** der Rückführbereich (32) der Rückführeinrichtung (16) über eine Einspeiseleitung (20) mit einem Einspeisebereich (22) der Hauptförderleitung (12) verbunden ist,
wobei die Hauptförderleitung (12) zwischen dem Einspeisebereich (22) und dem Verteilerkopf (14) einen Steigrohrquerschnitt aufweist, wobei die Hauptförderleitung in Strömungsrichtung vor dem Einspeisebereich (22) einen Einspeisequerschnitt aufweist, der vorzugsweise als eine Düse (24) ausgebildet ist, und der Steigrohrquerschnitt und der Einspeisequerschnitt in einem Verhältnis von 1:1 bis 2:1 stehen.

8. Landwirtschaftliche Verteilmaschine, mit
- einer Steuerungseinrichtung zum Steuern des Betriebs der Verteilmaschine,
- mehreren Ausbringeinrichtungen zum Ausbringen von körnigem Material auf eine landwirtschaftliche Nutzfläche, und
- einer Verteilvorrichtung (10), welche dazu eingerichtet ist, eine Luft-Material-Hauptströmung in mehrere Luft-Material-Einzelströmungen aufzuteilen und von der Steuerungseinrichtung vorgegebenen Ausbringeinrichtungen zuzuleiten;
**dadurch gekennzeichnet, dass** die Verteilvorrichtung (10) nach einem der vorstehenden Ansprüche ausgebildet ist.

9. Verfahren zum Betreiben einer Verteilvorrichtung (10) für körniges Material, insbesondere einer Verteilvorrichtung (10) nach einem der Ansprüche 1 bis 8, mit den Schritten
- Einleiten einer Luft-Material-Hauptströmung in einen Verteilkopf der Verteilvorrichtung (10) durch eine Hauptförderleitung (12) der Verteilvorrichtung (10);
- Aufteilen der in den Verteilerkopf (14) eingeleiteten Luft-Material-Hauptströmung in mehrere Luft-Material-Einzelströmungen; und
- Bewegen eines Umlenkelements (36) zumindest einer Rückführeinrichtung (16) wahlweise in eine Ausbringstellung, in welcher das Umlenkelement (36) eine in einen Einströmbereich (26) der Rückführeinrichtung (16) einströmende Luft-Material-Einzelströmung einem mit einer Ausbringleitung (18) verbundenen Ausbringbereich (28) der Rückführeinrichtung (16) zuleitet, oder in eine Absperrstellung, in welcher das Umlenkelement (36) eine in den Einströmbereich (26) der Rückführeinrichtung (16) einströmende Luft-Material-Einzelströmung über eine Rückführleitung (30) der Rückführeinrichtung (16) einem mit der Hauptförderleitung (12) verbundenen Rückführbereich (32) der Rückführeinrichtung (16) zuleitet;
wobei das Umlenkelement (36) in der Ausbringstellung eine den Rückführbereich (32) der Rückführeinrichtung (16) und den Ausbringbereich (28) der Rückführeinrichtung (16) verbindende Bypassleitung (34) der Rückführeinrichtung (16) absperrt, wobei das Umlenkelement (36) als Wippe mit zwei Wippenschenkeln (44a, 44b) ausgebildet ist, wobei sich die Wippenschenkel (44a, 44b) jeweils von einer Drehachse des Umlenkelements (36) radial nach außen erstrecken.

10. Verfahren nach Anspruch 9,
**dadurch gekennzeichnet, dass** das Umlenkelement (36) in der Absperrstellung die Bypassleitung (34) freigibt.

11. Verfahren nach Anspruch 9 oder 10,
**dadurch gekennzeichnet, dass** in der Ausbringstellung des Umlenkelements (36) ein erster Wippenschenkel (44a) des Umlenkelements (36) einen Durchgang zwischen dem Einströmbereich (26) der Rückführeinrichtung (16) und dem Rückführbereich (32) der Rückführeinrichtung (16) absperrt und ein zweiter Wippenschenkel (44b) des Umlenkelements (36) die Bypassleitung (34) der Rückführeinrichtung (16) absperrt.

12. Verfahren nach einem der Ansprüche 9 bis 11,
**dadurch gekennzeichnet, dass** in der Absperrstellung des Umlenkelements (36) ein erster Wippenschenkel (44a) des Umlenkelements (36) einen Durchgang zwischen dem Einströmbereich (26) der Rückführeinrichtung (16) und dem Ausbringbereich (28) der Rückführeinrichtung (16) absperrt.

## Claims

1. Distribution device (10) for granular material, having
- a distributor head (14) which is configured to divide the main air-material flow supplied through a main conveying line (12) to the distributor head (14) into a plurality of individual air-material flows; and
- at least one return apparatus (16) which comprises a movable deflector element (36) which is configured to supply, in a discharge position, an individual air-material flow flowing into an inflow region (26) of the return apparatus (16) to a discharge region (28) of the return apparatus (16) connected to a discharge line (18) and, in a block position, to supply an individual air-material flow flowing into the inflow region (26) of the return apparatus (16) to a return region (32) of the return apparatus (16) connected to the main conveying line (12) via a return line (30) of the return apparatus (16);
wherein the deflector element (36) is configured to block a bypass line (34) of the return apparatus (16) connecting the return region (32) of the return apparatus (16) and the discharge region (28) of the return apparatus (16) in the discharge position, wherein the deflector element (36) is designed as a rocker having two rocker limbs (44a, 44b), wherein the rocker limbs (44a, 44b) each extend radially outward from a rotational axis of the deflector element (36).

2. Distribution device (10) according to claim 1,
**characterized in that** the deflector element (36) is configured to release the bypass line (34) in the block position.

3. Distribution device (10) according to claim 1 or 2,
**characterized in that**
- a rocker limb (44b) of the deflector element (36) is configured to block the bypass line (34) of the return apparatus (16) in the discharge position of the deflector element (36);
- a rocker limb (44a) of the deflector element (36) is configured to block a passage between the inflow region (26) of the return apparatus (16) and the return region (32) of the return apparatus (16) in the discharge position of the deflector element (36); and/or
- at least one rocker limb (44a) of the deflector element (36) is configured to block a passage between the inflow region (26) of the return apparatus (16) and the discharge region (28) of the return apparatus (16) in the block position of the deflector element (36).

4. Distribution device (10) according to any of the preceding claims,
**characterized in that** the return apparatus (16) comprises a separating body (42) which separates the return line (30) and the bypass line (34) from one another at least in some portions, the deflector element (36) being configured to be in contact with the separating body (42) in the block position.

5. Distribution device (10) according to any of the preceding claims,
**characterized in that** the return apparatus (16) comprises an in particular circumferential stop rib (46) between the discharge region (28) and the bypass line (34), the deflector element (36) being configured to be in contact with the stop rib (46) in the discharge position.

6. Distribution device (10) according to any of the preceding claims,
**characterized in that** the deflector element (36) is formed, at least in some portions, from an elastic material and is configured to deform elastically when the discharge position and/or the block position is assumed.

7. Distribution device (10) according to any of the preceding claims,
**characterized in that** the return region (32) of the return apparatus (16) is connected via a feed line (20) to a feed region (22) of the main conveying line (12),
the main conveying line (12) comprising a riser pipe cross section between the feed region (22) and the distributor head (14), the main conveying line comprising a feed cross section upstream of the feed region (22) in the flow direction, which feed cross section is preferably designed as a nozzle (24), and the riser pipe cross section and the feed cross section having a ratio of 1:1 to 2:1.

8. Agricultural distributor, having
- a control apparatus for controlling the operation of the distributor,
- a plurality of discharge means for discharging granular material on an agricultural area, and
- a distribution device (10) which is configured to divide a main air-material flow into a plurality of individual air-material flows and to supply them to discharge means predetermined by the control apparatus;
**characterized in that** the distribution device (10) is designed according to any of the preceding claims.

9. Method for operating a distribution device (10) for granular material, in particular a distribution device (10) according to any of claims 1 to 8, comprising the steps of:
- introducing a main air-material flow into a distributor head of the distribution device (10) through a main conveying line (12) of the distribution device (10);
- dividing the main air-material flow introduced into the distributor head (14) into a plurality of individual air-material flows; and
- moving a deflector element (36) of at least one return apparatus (16) optionally into a discharge position, in which the deflection element (36) directs an individual air-material flow flowing into an inflow region (26) of the return device (16) to a discharge region (28) of the return device (16) connected to a discharge line (18), or into a shut-off position, in which the deflection element (36) directs an individual air-material flow flowing into the inflow region (26) of the return device (16) via a return line (30) of the return device (16) to a return region (32) of the return device (16) connected to the main conveyor line (12);
wherein the deflection element (36) in the discharge position blocks a bypass line (34) of the return device (16) connecting the return area (32) of the return device (16) and the discharge area (28) of the return device (16), wherein the deflection element (36) is designed as a rocker with two rocker legs (44a, 44b), wherein the rocker legs (44a, 44b) each extend radially outwards from a rotational axis of the deflection element (36).

10. Method according to claim 9,
**characterized in that** the deflection element (36) releases the bypass line (34) in the shut-off position.

11. Method according to claim 9 or 10,
**characterized in that** in the deployment position of the deflection element (36), a first rocker arm (44a) of the deflection element (36) blocks a passage between the inflow region (26) of the return device (16) and the return region (32) of the return device (16) and a second rocker arm (44b) of the deflection element (36) blocks the bypass line (34) of the return device (16).

12. Method according to any of claims 9 to 11,
**characterized in that** in the block position of the deflector element (36), a first rocker limb (44a) of the deflector element (36) shuts off a passage between the inflow area (26) of the return device (16) and the discharge area (28) of the return device (16).

## Revendications

1. Dispositif de distribution (10) pour matériau granulaire, comportant
- une tête de distributeur (14), qui est conçue pour diviser le flux d'air/de matériau principal introduit à travers une conduite de transport principale (12) de la tête de distribution (14) en plusieurs flux d'air/de matériau individuels ; et
- au moins un appareil de rappel (16), qui présente un élément de déviation mobile (36), qui est conçu, dans une position d'épandage, pour introduire un flux d'air/de matériau individuel s'écoulant dans une région d'entrée (26) de l'appareil de rappel (16) vers une région d'épandage (28) reliée à une conduite d'épandage (18) de l'appareil de rappel (16) et, dans une position d'obturation, pour introduire un flux d'air/de matériau individuel s'écoulant dans la région d'entrée (26) de l'appareil de rappel (16) vers une région de rappel (32) reliée à la conduite de transport principale (12) de l'appareil de rappel (16) par l'intermédiaire d'une conduite de rappel (30) de l'appareil de rappel (16) ;
dans lequel l'élément de déviation (36) est conçu pour obturer, dans la position d'épandage, une conduite de dérivation (34) de l'appareil de rappel (16) reliant la région de rappel (32) de l'appareil de rappel (16) et la région d'épandage (28) de l'appareil de rappel (16), dans lequel l'élément de déviation (36) est réalisé sous forme de bascule avec deux branches de bascule (44a, 44b), dans lequel les branches de bascule (44a, 44b) s'étendent radialement vers l'extérieur respectivement depuis un axe de rotation de l'élément de déviation (36).

2. Dispositif de distribution (10) selon la revendication 1,
**caractérisé en ce que** l'élément de déviation (36) est conçu pour libérer la conduite de dérivation (34) dans la position d'obturation.

3. Dispositif de distribution (10) selon la revendication 1 ou 2,
**caractérisé en ce que**
- une branche de bascule (44b) de l'élément de déviation (36) est conçue pour, dans la position d'épandage de l'élément de déviation (36), obturer la conduite de dérivation (34) de l'appareil de rappel (16) ;
- une branche de bascule (44a) de l'élément de déviation (36) est conçue pour, dans la position d'épandage de l'élément de déviation (36), obturer un passage entre la région d'entrée (26) de l'appareil de rappel (16) et la région de rappel (32) de l'appareil de rappel (16) ; et/ou
- au moins une branche de bascule (44a) de l'élément de déviation (36) est conçue pour, dans la position d'obturation de l'élément de déviation (36), obturer un passage entre la région d'entrée (26) de l'appareil de rappel (16) et la région d'épandage (28) de l'appareil de rappel (16).

4. Dispositif de distribution (10) selon l'une des revendications précédentes,
**caractérisé en ce que** le dispositif de rappel (16) présente un corps de séparation (42) qui sépare au moins par sections la conduite de rappel (30) et la conduite de dérivation (34), dans lequel l'élément de déviation (36) est conçu pour être en contact avec le corps de séparation (42) dans la position d'obturation.

5. Dispositif de distribution (10) selon l'une des revendications précédentes,
**caractérisé en ce que** l'appareil de rappel (16) présente, entre la région d'épandage (28) et la conduite de dérivation (34), une nervure de butée (46), en particulier périphérique, dans lequel l'élément de déviation (36) est conçu pour être en contact avec la nervure de butée (46) dans la position d'épandage.

6. Dispositif de distribution (10) selon l'une des revendications précédentes,
**caractérisé en ce que** l'élément de déviation (36) est réalisé au moins par sections en un matériau élastique et est conçu pour se déformer élastiquement lors de la prise de la position d'épandage et/ou de la position d'obturation.

7. Dispositif de distribution (10) selon l'une des revendications précédentes,
**caractérisé en ce que** la région de rappel (32) de l'appareil de rappel (16) est reliée à une région d'alimentation (22) de la conduite de transport principale (12) par l'intermédiaire d'une conduite d'alimentation (20),
dans lequel la conduite de transport principale (12) présente, entre la région d'alimentation (22) et la tête de distributeur (14), une section transversale de tube ascendant, dans lequel la conduite de transport principale présente, dans le sens d'écoulement, en amont de la région d'alimentation (22), une section transversale d'alimentation qui est de préférence réalisée comme une buse (24), et la section transversale de tube ascendant et la section transversale d'alimentation sont dans un rapport de 1:1 à 2:1.

8. Machine de distribution agricole, comportant
- un appareil de commande pour commander le fonctionnement de la machine de distribution,
- plusieurs appareils d'épandage pour l'épandage de matériau granulaire sur une surface utile agricole, et
- un dispositif de distribution (10) qui est conçu pour diviser un flux d'air/de matériau principal en plusieurs flux d'air/de matériau individuels et pour les introduire dans des appareils d'épandage prédéfinis par l'appareil de commande ;
**caractérisé en ce que** le dispositif de distribution (10) est réalisé selon l'une des revendications précédentes.

9. Procédé permettant de faire fonctionner un dispositif de distribution (10) pour du matériau granulaire, en particulier un dispositif de distribution (10) selon l'une des revendications 1 à 8, comportant les étapes de
- envoi d'un flux d'air/de matériau principal dans une tête de distributeur du dispositif de distribution (10) par l'intermédiaire d'une conduite de transport principale (12) du dispositif de distribution (10) ;
- division du flux d'air/de matériau principal envoyé dans la tête de distributeur (14) en plusieurs flux d'air/de matériau individuels ; et
- déplacement d'un élément de déviation (36) d'au moins un appareil de rappel (16) au choix dans une position d'épandage, dans laquelle l'élément de déviation (36) introduit un flux d'air/de matériau individuel s'écoulant dans une région d'entrée (26) de l'appareil de rappel (16) vers une région d'épandage (28) de l'appareil de rappel (16) reliée à une conduite d'épandage (18), ou dans une position d'obturation, dans laquelle l'élément de déviation (36) dirige un flux d'air/de matériau individuel s'écoulant dans la région d'entrée (26) de l'appareil de rappel (16) vers une région de rappel (32) de l'appareil de rappel (16) reliée à la conduite de transport principale (12) par l'intermédiaire d'une conduite de rappel (30) de l'appareil de rappel (16) ;
dans lequel l'élément de déviation (36) obture, dans la position d'épandage, une conduite de dérivation (34) de l'appareil de rappel (16) reliant la région de rappel (32) de l'appareil de rappel (16) et la région d'épandage (28) de l'appareil de rappel (16), dans lequel l'élément de déviation (36) est réalisé sous forme de bascule avec deux branches de bascule (44a, 44b), dans lequel les branches de bascule (44a, 44b) s'étendent radialement vers l'extérieur respectivement depuis un axe de rotation de l'élément de déviation (36).

10. Procédé selon la revendication 9,
**caractérisé en ce que** l'élément de déviation (36) libère la conduite de dérivation (34) dans la position d'obturation.

11. Procédé selon la revendication 9 ou 10,
**caractérisé en ce que,** dans la position d'épandage de l'élément de déviation (36), une première branche de bascule (44a) de l'élément de déviation (36) obture un passage entre la région d'entrée (26) de l'appareil de rappel (16) et la région de rappel (32) de l'appareil de rappel (16) et une seconde branche de bascule (44b) de l'élément de déviation (36) obture la conduite de dérivation (34) de l'appareil de rappel (16).

12. Procédé selon l'une des revendications 9 à 11,
**caractérisé en ce que,** dans la position d'obturation de l'élément de déviation (36), une première branche de bascule (44a) de l'élément de déviation (36) obture un passage entre la région d'entrée (26) de l'appareil de rappel (16) et la région d'épandage (28) de l'appareil de rappel (16).
